# EUROPÄISCHE PATENTANMELDUNG

(11) **EP 2 530 352 A2**
(43) Veröffentlichungstag der Anmeldung: **05.12.2012**
(21) Anmeldenummer: 12003582.9
(22) Anmeldetag: 08.05.2012
(51) Int. Cl.: F16F 1/38

(54) **Elastisches Kopplungsteil, Tilgungsanordnung und Verfahren zum Herstellen des elastischen Kopplungsteils**

(30) Priorität: 30.05.2011 DE 102011102780
(71) Anmelder: Anvis Deutschland GmbH, 36396 Steinau an der Strasse (DE)
(72) Erfinder: Bös, Sebastian, 63636 Brachttal (DE); Ditzel, Jörg, 63579 Freigericht (DE)
(74) Vertreter: Schmid, Nils T.F.

(57) **Zusammenfassung**

Bei einem elastischen Kopplungsteil (1) zum elastischen Verbinden einer Tilgermasse, wie eines Gasgenerators (41), mit einem Schwingungen und/oder Vibrationen ausgesetzten Kraftfahrzeugteil, insbesondere Airbagmodul, umfassend einen kraftfahrzeugteilseitigen starren Tragring (3), wenigstens ein tilgermassenseitiges Befestigungsteil, wie ein Nietkopf (5), aus einem starren Material und einen den Tragring (3) sowie das Befestigungsteil koppelnden Federkörper (7), ist vorgesehen, dass der Tragring (3) und/oder das Befestigungsteil jeweils aus einem Kunststoffmaterial sowie der Federkörper (7) aus einem Elastomermaterial in einem einzigen Herstellungsschritt mittels eines Zwei-Komponenten-Verfahrens, insbesondere eines Zwei-Komponenten-Spritzguss, hergestellt sind.

## Beschreibung

Die Erfindung betrifft ein elastisches Kopplungsteil zum elastischen Verbinden einer Tilgermasse, wie eines Gasgenerators, mit einem Schwingungen und/oder Vibrationen ausgesetzten Kraftfahrzeugteil, insbesondere einem Airbagmodul, einem Lenkrad oder einem an der Lenkradstruktur befestigten Karosserieteil.

Im Fahrbetrieb eines Kraftfahrzeugs wirken hochdynamische Schwingungen und/oder Vibrationen auf die Fahrzeugkarosserie und ergo auch auf das Lenkrad, das von dem Fahrer des Kraftfahrzeugs bedient werden muss. Es ist bekannt, diese Vibrationen und Schwingungen dadurch zu tilgen, eine Tilgermasse elastisch schwingfähig an beispielsweise dem Lenkrad im Eigenresonanzbereich des Lenkrads anzuhängen. Im Bereich des Lenkrads wird die Tilgermasse häufig durch den Gasgenerator eines Airbagmoduls gebildet, das an dem Lenkrad des Kraftfahrzeugs zu befestigen ist.

Ein wesentlicher Aspekt der Tilgung wird durch die Auslegung des elastischen Verbindungssystems bestimmt, das durch das elastische Kopplungsteil definiert wird. Aus DE 10 2004 051 942 B4 ist ein elastisches Kopplungsteil bekannt, das ein Trägerelement umfasst, das karosserieseitig beispielsweise an der Lenkradstruktur starr über Schraubverbindungen befestigt ist. Das Trägerelement besteht aus einem Kunststoff, wie PA66, mit einem Glasfaseranteil von 30 bis 40 %. DE 10 2004 051 942 B4 lehrt, einen Federkörper aus Elastomermaterial zwischen dem Gasgenerator und der Kraftfahrzeugkarosserie derart anzuordnen, dass eine Tilgungsgegenschwingung des Gasgenerators möglich ist. Um eine kraftübertragende und formschlüssige Verbindung zwischen dem Trägerelement und dem Federkörper zu realisieren, sind Durchbrüche in dem Trägerelement bereitgestellt, die von dem Elastomermaterial ausgekleidet umspritzt sind. Auf diese Weise wird eine strukturelle Befestigung zwischen dem Trägerelement und dem Federkörper geschaffen, mit dem auch größere Lastspannungen sicher von dem Trägerelement in den Federkörper und zurück übertragen werden können. Die Auskleidung der Durchbrüche realisiert eine strukturelle Verhakung des Federkörpers mit dem Trägerelement und umgekehrt. Diese auf Formschluss basierte Befestigung stellte sich als ausreichend fest heraus, fordert aber wegen der Durchbrüche oder Ankerbohrungen einen größeren Raumbedarf und hat fertigungstechnische Herausforderungen, die zu einer erhöhten finanziellen Belastung für den Hersteller führen.

Allerdings bedarf es bei der bekannten Umspritzung des Trägerelements bei Ausbildung von Hinterschnitten und Verhakungsstrukturen keines Haftvermittlers für das Elastomermaterial, um einen kraftschlüssigen Übergang zwischen dem Elastomermaterial und dem Kunststoffmaterial des Trägerelements bereitzustellen.

Es ist Aufgabe der Erfindung, ein elastisches Kopplungsteil zum elastischen Verbinden einer Tilgermasse mit einem Kraftfahrzeugteil bereitzustellen, bei dem die Nachteile des Stands der Technik überwunden sind, insbesondere ein ausreichend fester Kraftübertragungsübergang zwischen dem karosserieseitigen Trägerelement und dem tilgermassenseitigen Elastomerkörper zu schaffen, ohne einen Haftvermittler zwischen dem Elastomermaterial und dem Kunststoffmaterial bereitzustellen.

Diese Aufgabe wird durch die Merkmale von Anspruch 1 gelöst.

Danach ist ein elastisches Kopplungsteil zum elastischen Verbinden einer Tilgermasse, wie eines Gasgenerators, mit einem Schwingungen und/oder Vibrationen ausgesetzten Kraftfahrzeugteil, insbesondere Airbagmodul, vorgesehen. Das elastische Kopplungsteil umfasst einen kraftfahrzeugteilseitigen starren Tragring, der insbesondere starr mit dem Kraftfahrzeugteil, wie einer Lenkradstruktur eines Kraftfahrzeugs, verbunden werden soll. Des weiteren umfasst das elastische Kopplungsteil ein Befestigungsteil, das beispielsweise als Nietkopf oder Rasteinrichtung ausgeführt sein kann und aus einem starren Material besteht. Das Befestigungsteil dient dazu, das elastische Kopplungsteil starr fest an die Tilgermasse anzubinden. In Kraft-übertragungsrichtung zwischen der Tilgermasse und dem Karosserieteil des Kraftfahrzeugs, ist zwischen dem tilgermassenseitigen Befestigungsteil und dem kraftfahrzeugteilseitigen Tragring ein Federkörper vorgesehen, der eine Tilgungsschwingungsbewegung zwischen dem Karosserieteil und der Tilgermasse insbesondere in dem Resonanzfrequenzbereich zulässt. Erfindungsgemäß ist/sind der Tragring und/oder das Befestigungsteil jeweils aus einem Kunststoffmaterial realisiert, wobei vorzugsweise ein und dasselbe Kunststoffmaterial für den Tragring und das Befestigungsteil verwendet werden kann. Auch unterschiedliche starre Kunststoffmaterialien sind einsetzbar. Es ist auch vorstellbar, dass entweder der Tragring oder das Befestigungsteil aus einem Metall, wie Edelstahl, gebildet ist. Der Federkörper besteht aus einem Elastomermaterial. Erfindungsgemäß ist der Tragring, das Befestigungsteil und der Federkörper mittels eines Zwei-Komponenten-Verfahrens, insbesondere eines Zwei-Komponenten-Spritzgussverfahrens, hergestellt.

Es zeigte sich, dass das Zwei-Komponenten-Herstellungsverfahren eine ausreichende Befestigungs- oder Anbindungsstärke zwischen dem Federkörper und dem Befestigungsteil sowie dem Tragring bereitstellt, um ein Schwingen des Verbindungssystems durch die Anbindung der Tilgermasse an das Karosserieteil des Kraftfahrzeugteils bereitzustellen. Die Anbindungsübergänge zwischen dem Elastomermaterial und dem Kunststoffmaterial sind derart stark ausgeführt, dass auch hinterschnittfreie, verhakungsfreie Anbindungsflächen für einen sicheren Kraftübertrag ausreichen. Selbst plane Übergangsflächen ohne Sprünge oder Stufen reichen aus, um den festen Anschluss des Federkörpers an dem jeweiligen Kunststoffmaterial sicher zu stellen.

Besonders gute baubeständige, elastische Kopplungsteile werden dann erfindungsgemäß erreicht, wenn für das Elastomermaterial Festsilikon oder Flüssigsilikonkautschuk, insbesondere EPDM, NR, verwendet werden. Diese Elastomermaterialien kennzeichnen sich gegenüber thermoplastischen Elastomermaterialien (TPE) durch ein wesentlich besseres Setzverhalten insbesondere bei höheren Temperaturen aus. Auch das Schwingungsverhalten ändert sich bei den bevorzugten Elastomermaterialien auch bei höheren Temperaturen deutlich weniger stark als bei TPE. Bei EPDM, NR und Silikon ist ein geringerer Temperatureinfluss gegeben. Insbesondere ist die Shore-Härte über einen großen Temperaturbereich im wesentlichen konstant.

Es zeigte sich, dass mit den bevorzugten Elastomermaterialien, insbesondere Flüssigkeitssilikon, starke Bindungsübergänge zwischen dem Elastomermaterial und dem Kunststoffmaterial einhergehen, welche Bindungskraft auch über einen großen Temperaturbereich konstant stark bleibt.

Grundsätzlich sind vorzugsweise das Kunststoffmaterial und das Elastomermaterial derart aufeinander abgestimmt, insbesondere ausgewählt, dass ein Grenzflächenbereich zwischen dem Kunststoffmaterial und dem Elastomermaterial eine chemische Vernetzung ausbildet. Diese chemische Vernetzung ist besonders bei Natur- oder Synthetikkautschuk, Festsilikon oder Flüssigkeitssilikonkautschuk ersichtlich.

Im Hinblick auf das Kunststoffmaterial für den Tragring und das Befestigungsteil sei angemerkt, dass das Kunststoffmaterial durchaus auch mit Metallabschnitten kombiniert sein kann. Grundsätzlich soll für das Kunststoffmaterial oder einem zusätzlichen Metallmaterial gewährleistet sein, dass das Befestigungsteil oder der Tragring an das Karosserieteil oder die Tilgermasse mittels einem entsprechend geeigneten Schweißverfahrens befestigt werden.

Bei der bevorzugten Ausführung der Erfindung ist ein Grenzflächenbereich am Übergang zwischen dem Kunststoffmaterial und dem Elastomermaterial frei eines Haftvermittlers. Somit entfallen aufwendige umweltschonende Entsorgungsprozeduren von Produktionsresten. Auch die für die Umwelt schädlichen Lösungsmittel, die in Haftvermittlern vorzusehen sind, stellen keine Umweltbelastung dar.

Vorzugsweise ist der Tragring oder das Befestigungsteil aus einem Metall, wie Edelstahl, gefertigt. In diesem Fall kann im Grenzflächenbereich am Übergang zwischen dem Metallabschnitt des Tragrings oder des Befestigungsteils und dem Elastomermaterial eine zusätzliche Metallschicht, insbesondere eine ZnNi-Schicht, vorgesehen sein. Auf diese Weise wird die chemische Anbindungsvernetzung innerhalb des Elastomermaterials verstärkt. Es sind insbesondere auch Paarungen zwischen dem Flüssigsilikon und einer ZnNi-Oberfläche an einem Metallbereich oder -teilbereich beispielsweise aus Edelstahl vorzusehen. Die gesamten Materialangaben sind insbesondere zur Absicherung dienlich, wenn eine Befestigung ohne Kunststoff für das Befestigungsteil stattfinden soll.

Bei einer bevorzugten Ausführung der Erfindung hat der Federkörper eine insbesondere zylindrische Hohlstruktur mit einem tragringseitigen Ende. Das tragringseitige Ende kleidet ein in dem Tragring ausgebildetes Durchgangsloch, insbesondere mehrere in dem Tragring ausgebildete Durchgangslöcher, vollständig und vorzugsweise eine von dem Federkörper abgewandte Seite des Tragring kontaktbildend aus.

Bei einer bevorzugten Ausführung der Erfindung sind eine an dem Tragring angebrachte Dichtlippe und/oder ein an dem Tragring angebrachter Anschlag jeweils aus dem Elastomermaterial des Federkörpers in einem einzigen Herstellungsschritt gefertigt, insbesondere gespritzt. Hierzu sei angemerkt, dass jedes zusätzliche Elastomerfunktionsteil in einem einzigen Herstellungsschritt gespritzt sein soll.

Vorzugsweise ist eine Wandstärke des hohlzylindrischen Federkörpers in Axialrichtung im wesentlichen konstant, um ein vorhersehbares Schwingungsverhalten zu erzeugen. Insbesondere soll der Federkörper in jeglicher Schwingungsrichtung im wesentlichen dieselbe Schwingungseigenschaft bereitstellen.

Bei einer Weiterbildung der Erfindung sind wenigstens drei Befestigungsteile in äquidistanten Winkelabständen am insbesondere kreisförmigen Tragring über jeweils einem Federkörper angeordnet.

Vorzugsweise hat das wenigstens eine Befestigungsteil in einer Axialrichtung eine Rotationssymmetrie mit einem T-förmigen Querschnitt und ist vorzugsweise als Vollkörper ausgebildet. Sich gegenüber liegende Querschenkel des T-förmigen Querschnitts dienen einerseits als Abstützung für den insbesondere hohlzylindrischen Federkörper und andererseits als Auflage für einen Montageflansch der Tilgermasse. Ein Hauptstamm des T-förmigen Querschnitts ist derart dimensioniert, dass er im wesentlichen formkomplementär in einem in den Montageflansch ausgebildeten Durchgang passend aufgenommen werden kann. Auf diese Weise soll die Position der Tilgermasse in Radialrichtung festgelegt sein. Von dem Hauptstamm erstrecken sich die Querschenkel des T-förmigen Querschnitts weg.

Bei einer Weiterbildung der Erfindung hat der Federkörper eine insbesondere hohlzylindrische Hohlstruktur mit einem befestigungsteilseitigen Ende. Es zeigte sich, dass es für einen ausreichenden Kraftfluss zwischen dem Federkörper und dem Befestigungsteil ausreicht, wenn das Befestigungsteil den Federkörper nur an einer radialen Stirnseite, die flächig und stufenfrei ausgebildet ist, des befestigungsteilseitigen Endes der Hohlstruktur des Federkörpers koppelnd berührt.

Bei einer bevorzugten Ausführung der Erfindung hat der Tragring eine Ringplatte mit einem L-förmigen Querschnitt. In einem radialen Schenkel des L-förmigen Querschnitts sind Durchgangslöcher für den Federkörper ausgebildet. An einem radial innen liegenden, axialen Schenkel, der insbesondere senkrecht zu dem radialen Schenkel des L-förmigen Querschnitts liegt, ist ein Bewegungsanschlag aus Elastomermaterial angeordnet, der eine Bewegung sowohl in Axial- als auch in Radialrichtung begrenzt.

Des weiteren betrifft die Erfindung eine Tilgungsanordnung mit einer Tilgungsmasse, wie eines Gasgenerators, zum elastischen Verbinden mit einem Schwingungen und/oder Vibrationen ausgesetzten Kraftfahrzeugteil, insbesondere einem Airbagmodul, sowie einem erfindungsgemäßen elastischen Kopplungsteil, dass die Tilgermasse mit dem Kraftfahrzeugteil elastisch schwingend verbindet.

Des weiteren betrifft die Erfindung ein Verfahren zum Herstellen eines elastischen Kopplungsteils zur elastischen Verbindung einer Tilgermasse, wie eines Gasgenerators, mit einem Schwingungen und/oder Vibrationen ausgesetzten Kraftfahrzeugteil, insbesondere einem Airbagmodul. Es sei angemerkt, dass die verfahrenstechnischen Merkmale des erfindungsgemäßen elastischen Kopplungsteils Schritte des erfindungsgemäßen Verfahrens sein können. Erfindungsgemäß werden ein kraftfahrzeugteilseitiger Tragring und ein tilgermassenseitiges Befestigungsteil, wie ein Nietkopf, jeweils aus einem Kunststoffmaterial und einem den Tragring sowie das Befestigungsteil koppelnden Federkörper aus einem Elastomermaterial in einem einzigen Herstellungsschritt mittels eines Zwei-Komponenten-Verfahrens, insbesondere eines Zwei-Komponentenspritzgußverfahrens, hergestellt.

Bevorzugte Ausführungen sind in den Unteransprüchen angegeben.

Weitere Eigenschaften, Merkmale und Vorteile der Erfindung werden durch die folgende Beschreibung einer bevorzugten Ausführung anhand der beiliegenden Zeichnungen deutlich, in denen zeigen:
- Figur 1: eine Draufsicht des erfindungsgemäßen elastischen Kopplungsteils;
- Figur 2: eine Querschnittsansicht entlang der Schnittlinie II-II nach Figur 1;
- Figur 3: eine Querschnittsansicht einer erfindungsgemäßen Tilgungsanordnung mit einem Gasgenerator und einem erfindungsgemäßen elastischen Kopplungsteil gemäß den Figuren 1 und 2; und
- Figur 4: eine Querschnittsansicht des Detailbereichs IV nach Figur 2.

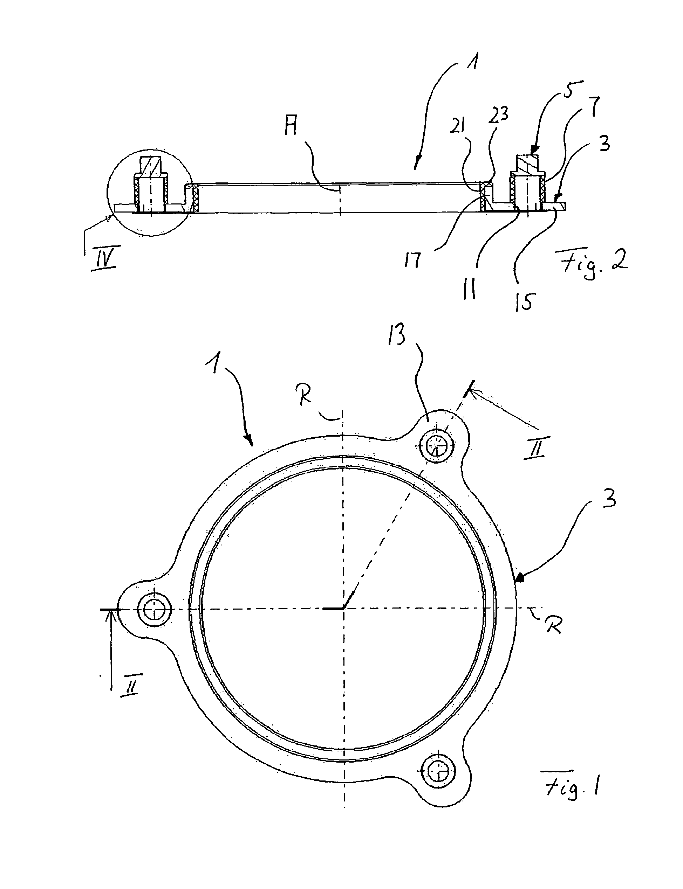

In den Figuren 1, 2 und 4 ist das erfindungsgemäße elastische Kopplungsteil zum elastischen Verbinden einer Tilgermasse, wie eines Gasgenerators, mit einem Schwingungen und/oder Vibrationen ausgesetzten Kraftfahrzeugteil im Allgemeinen mit der Bezugsziffer 1 versehen. Das elastische Kopplungsteil 1 besteht im wesentlichen aus drei Hauptbestandteilen, nämlich einem im wesentlichen kreisförmigen Tragring 3, einem als Nietkopf 5 ausgebildeten Befestigungsteil und einem den Tragring 3 mit dem Nietkopf 5 elastisch schwingend verbindenden, hauptsächlich zylindrischen Federkörper 7.

Wie in Figur 1 ersichtlich ist, sind drei Nietköpfe 5 vorgesehen, die in einem Winkelabstand von 120° längs des Umfangs des kreisförmigen Tragrings 3 voneinander beabstandet sind.

Der Tragring 3 hat für jedes Befestigungsteil ein Durchgangsloch 11, das in einem Verstärkungsbereich 13 des Tragrings 3 eingebracht ist (Fig. 1).

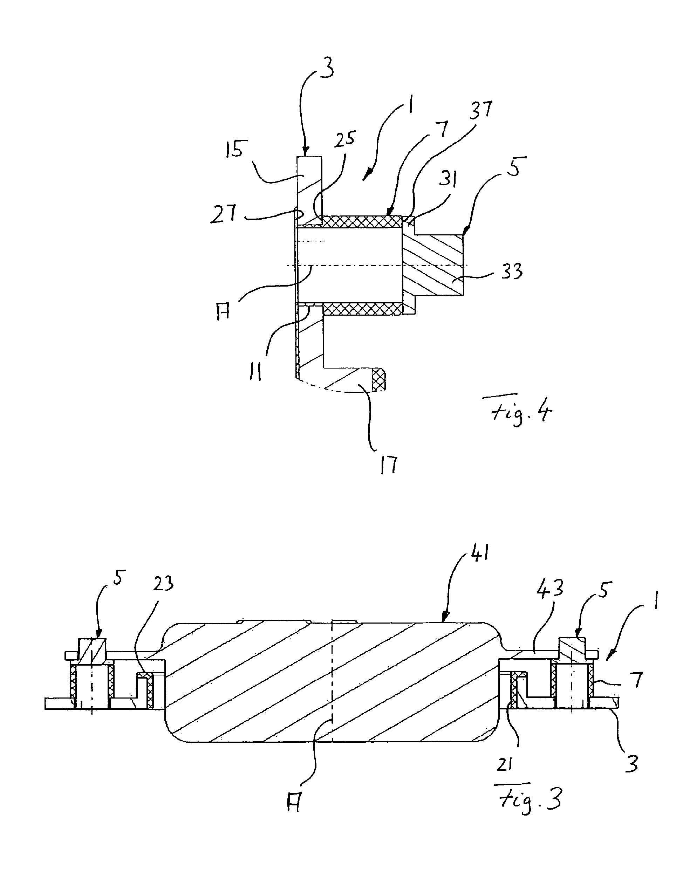

Wie in den Figuren 2 und 4 ersichtlich ist, hat der Tragring 3 im Radialquerschnitt eine L-Form, die im Verlauf des Umfangs des Tragrings 3 bis auf den Verstärkungsbereich 13 formkonstant ist. Im Verstärkungsbereich 13 ist der Radialschenkel 15 der L-Form deutlich länger, insbesondere doppelt so lang wie die im übrigen zwei Verstärkungsbereiche 13 verbindenden 120°-Abschnitte des Tragrings 3. An einem senkrecht zum Radialschenkel 15 ausgerichteten Axialschenkel 17 schließt ein Elastomeranschlag 21 bzw. 23 direkt an, der eine Begrenzung der Schwingungsbewegung der (in Figur 3 gezeigten) Tilgermasse in Radialrichtung R bzw. in Axialrichtung A bereitstellt.

Wie in Figur 4 ersichtlich ist, ist das Durchgangsloch 11, also was die parallel zur Axialrichtung A liegende Innenwandfläche betrifft sowie den unmittelbar daran anschließenden Tragringoberflächenbereich 25, 27, vollständig von dem Elastomermaterial des Federkörpers 7 berührend ausgekleidet.

Von dem Durchgangsloch 11 erstreckt sich der Federkörper 7 in Form eines Hohlzylinders mit konstanter Wandstärker in Axialrichtung konzentrisch vom Durchgangsloch 11 hin zum Nietkopf 5.

Der Nietkopf 5 ist aus einem Kunststoffvollmaterial gefertigt und hat im Querschnitt eine T-Form. Die T-Form hat zwei insbesondere dünnere Kurzschenkel, die sich in Radialrichtung erstrecken und als Abstützung für den Federkörper 7 dienen. Der in Radialrichtung erstreckende und umlaufende Kurzschenkel 31 dient außerdem an dessen von dem Federkörper 7 abgewandten Seite als Auflage für einen Montageflansch der Tilgermasse, was in Figur 3 ersichtlich und noch später erläutert wird.

Von dem Kurzschenkel 31 erstreckt sich der insbesondere breitere Hauptstamm 33 der T-Form in Axialrichtung weg. Der Hauptstamm 33 ist derart dimensioniert, dass er in einem Montagedurchgang des Montageflansches der Tilgermasse insbesondere passgenau aufgenommen werden kann, was in Figur 3 ersichtlich ist.

Wie in Figur 4 dargestellt ist, besteht die Übergangsfläche 37 zwischen dem nietkopfseitigen Ende des Federkörpers 7 und der flachen Befestigungsfläche der den Federkörper 7 zugewandten Seite des Kurzschenkels 31 aus einer planen, stufenfreien Fläche. Um einen ausreichenden Kraftfluss zwischen dem Nietkopf 5 und dem Federkörper 7 bereitzustellen, sind sowohl der Nietkopf 5 als auch aus fertigungstechnischen Gründen der Tragring 3 sowie der Federkörper 7 durch einen einzigen Verfahrensschritt mittels eines Zwei-Komponenten-Spritzgussverfahrens hergestellt.

Dabei wird vorzugsweise ein Festsilikon oder ein Flüssigkeitssilikon (kurz: LSR) verwendet, das zu einem großen Anteil aus Siloxane und weiteren Füllstoffen und Additiven besteht. Mit der Wahl eines geeigneten Kunststoffmaterials ist festgestellt worden, dass auch bei kleinflächigen Befestigungsübergangsbereichen, wie in Figur 4 zwischen dem Nietkopf 5 und dem Federkörper 7 dargestellt ist, die chemische Vernetzung zwischen dem Elastomermaterial und dem Kunststoff durch das Zwei-Komponenten-Verfahren ausreicht. Gleiches gilt auch bei der tragringseitigen Verhakungsstruktur durch die Auskleidung des Durchgangslochs 11. Auch die Bewegungsanschläge 21, 23 sind fest an dem Kunststofftragring angebracht. Auf diese Weise sind Haftvermittler zwischen den Übergangsflächen des Kunststoffmaterials und des Elastomermaterials entbehrlich.

In Figur 3 ist das erfindungsgemäße elastische Kopplungsteil 1 in einer erfindungsgemäßen Tilgungsanordnung eingebaut. Bei der erfindungsgemäßen Tilgungsanordnung ist ein Gasgenerator 41 dargestellt, an dem das erfindungsgemäße Kopplungsteil 1 anmontiert ist. Die karosserieteilseitige Anbringung insbesondere an einem Airbagmodul ist nicht dargestellt.

Zur Montage der Tilgungsanordnung sind in einem in Radialrichtung erstreckenden Montageflansch 43 wenigstens entsprechend der Anzahl der Nietköpfe 5 Durchgänge in dem Montageflansch 43 ausgebildet, die formkomplementär zum Hauptstamm 33 des Nietkopfs 5 ausgeführt sind. Auf diese Weise ist eine genau Positionierung des Gasgenerators 4 im Hinblick auf das Kraftfahrzeugteil realisiert, wobei eine genaue Schwingungsbewegung erreicht ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Kopplungsteil
- 3: Tragring
- 5: Nietkopf
- 7: Federkörper
- 11: Durchgangsloch
- 13: Verstärkungsbereich
- 15: Radialschenkel
- 17: Axialschenkel
- 21, 23: Elastomeranschlag
- 25, 27: Tragringoberflächenbereich
- 31: Kurzschenkel
- 33: Hauptstamm
- 37: Übergangsfläche
- 41: Gasgenerator
- 43: Montageflansch
- A: Axialrichtung
- R: Radialrichtung

## Patentansprüche

1. Elastisches Kopplungsteil (1) zum elastischen Verbinden einer Tilgermasse, wie eines Gasgenerators (41), mit einem Schwingungen und/oder Vibrationen ausgesetzten Kraftfahrzeugteil, insbesondere Airbagmodul, umfassend einen kraftfahrzeugteilseitigen starren Tragring (3), wenigstens ein tilgermassenseitiges Befestigungsteil, wie ein Nietkopf (5), aus einem starren Material und einen den Tragring (3) sowie das Befestigungsteil koppelnden Federkörper (7), **dadurch gekennzeichnet, dass** der Tragring (3) und/oder das Befestigungsteil jeweils aus einem Kunststoffmaterial sowie der Federkörper (7) aus einem Elastomermaterial in einem einzigen Herstellungsschritt mittels eines Zwei-Komponenten-Verfahrens, insbesondere eines Zwei-Komponenten-Spritzguss, hergestellt sind.

2. Elastisches Kopplungsteil (1) nach Anspruch 1, **dadurch gekennzeichnet, dass** das Kunststoffmaterial und das Elastomermaterial derart auf einander abgestimmt, insbesondere ausgewählt, sind, dass ein Grenzflächenbereich am Übergang zwischen dem Kunststoffmaterial und dem Elastomermaterial eine chemische Vernetzung ausbildet, und/oder dass das Elastomermaterial ein Natur- oder Synthesekautschuk, Festsilikon oder Flüssigkeitssilikonkautschuk ist.

3. Elastisches Kopplungsteil (1) nach Anspruch 1 oder 2, **dadurch gekennzeichnet, dass** ein Grenzflächenbereich am Übergang zwischen dem Kunststoffmaterial und dem Elastomermaterial frei eines Haftvermittlers realisiert ist.

4. Elastisches Kopplungsteil (1) nach einem der vorstehenden Ansprüche, **dadurch gekennzeichnet, dass** der Tragring oder das Befestigungsteil aus einem Metall, insbesondere Edelstahl, gefertigt ist, wobei insbesondere im Grenzflächenbereich am Übergang zwischen zumindest einem Teilabschnitt des Tragrings (3) oder des Befestigungsteils und dem Elastomermaterial eine Metallschicht, insbesondere eine ZnNi-Schicht, vorgesehen ist.

5. Elastisches Kopplungsteil (1) nach einem der vorstehenden Ansprüche, **dadurch gekennzeichnet, dass** der Federkörper (7) eine insbesondere zylindrische Hohlstruktur mit einem tragringseitigen Ende aufweist, das ein in dem Tragring (3) ausgebildetes Durchgangsloch (11) vollständig und vorzugsweise eine vom Federkörper (7) abgewandte Seite des Tragrings (3) kontaktbildend auskleidet, und/oder eine an dem Tragring (3) angebrachte Dichtlippe und/oder ein an dem Tragring (3) angebrachter Anschlag jeweils aus dem Elastomermaterial des Federkörpers (7) in dem einzigen Herstellungsschritt gefertigt sind, wobei insbesondere eine Wandstärke des hohlzylindrischen Federkörpers (7) in Axialrichtung (A) im wesentlichen konstant ist.

6. Elastisches Kopplungsteil (1) nach einem der vorstehenden Ansprüche, **dadurch gekennzeichnet, dass** wenigstens drei Befestigungsteile in äquidistanten Winkelabständen am insbesondere kreisförmigen Tragring (3) angeordnet sind und/oder das wenigstens eine Befestigungsteil eine Rotationssymmetrie mit einem T-förmigen Querschnitt aufweist, wobei sich gegenüberliegende Querschenkel einerseits als Abstützung für den Federkörper (7) und andererseits als Auflage für einen Montageflansch (43) der Tilgermasse dienen und vorzugsweise ein Hauptstamm (33), von dem sich die Querschenkel weg erstrecken, zur Aufnahme in einem in dem Montageflansch (43) ausgebildeten Durchgang ausgelegt ist.

7. Elastisches Kopplungsteil (1) nach einem der vorstehenden Ansprüche, **dadurch gekennzeichnet, dass** der Federkörper (7) eine insbesondere zylindrische Hohlstruktur mit einem befestigungsteilseitigen Ende aufweist, wobei das Befestigungsteil den Federkörper (7) nur an einer radialen Stirnseite des befestigungsteilseitigen Endes koppelnd berührt.

8. Elastisches Kopplungsteil (1) nach einem der vorstehenden Ansprüche, **dadurch gekennzeichnet, dass** der Tragring (3) eine Ringplatte mit einem L-förmigen Querschnitt aufweist, wobei in einem radialen Schenkel Durchgangslöcher für den Federkörper (7) ausgebildet sind und an einem radial innenliegenden, axialen Schenkel ein Bewegungsanschlag aus Elastomermaterial in Axial- und/oder Radialrichtung (R) angeordnet ist.

9. Tilgungsanordnung mit einer Tilgermasse, wie einem Gasgenerator (41), zum elastischen Verbinden mit einem Schwingungen und/oder Vibrationen ausgesetzten Kraftfahrzeugteil, insbesondere Airbagmodul, und einem nach einem der vorstehenden Ansprüche ausgebildeten elastischen Kopplungsteil (1).

10. Verfahren zum Herstellen eines elastischen Kopplungsteils (1) zum elastischen Verbinden einer Tilgermasse, wie eines Gasgenerators (41), mit einem Schwingungen und/oder Vibrationen ausgesetzten Kraftfahrzeugteil, insbesondere Airbagmodul, **dadurch gekennzeichnet, dass** ein kraftfahrzeugteilseitiger Tragring (3) und/oder ein Befestigungsteil, wie ein Nietkopf (5), jeweils aus einem Kunststoffmaterial und ein den Tragring (3) sowie das tilgermassenseitige Befestigungsteil koppelnder Federkörper (7) aus einem Elastomermaterial in einem einzigen Herstellungsschritt mittels eines Zwei-Komponenten-Verfahrens, insbesondere eines Zwei-Komponenten-Spritzguss, hergestellt werden.
